# EUROPEAN PATENT APPLICATION

(11) **EP 3 739 199 A1**
(43) Date of publication of application: **18.11.2020**
(21) Application number: 19174855.7
(22) Date of filing: 16.05.2019
(51) Int. Cl.: F03D 7/02, F03D 7/04

(54) **CONTROLLING WIND TURBINE ROTOR SPEED BY REGULATING ROTOR YAW ANGLE**

(71) Applicant: Siemens Gamesa Renewable Energy A/S, 7330 Brande (DK)
(72) Inventor: Goldenbaum, Nikolaus, 8680 Ry (DK); Egedal, Per, 7400 Herning (DK); Staerdahl, Jesper Winther, 7451 Sunds (DK)
(74) Representative: Aspacher, Karl-Georg

(57) **Abstract**

A method of controlling rotor speed of a wind turbine generator is described, the method comprising (a) receiving a reference rotor speed value (5), (b) determining an actual rotor speed value (82), and (c) regulating a rotor yaw angle in dependency of a difference (12) between the reference rotor speed value and the actual rotor speed value. Furthermore, a corresponding wind turbine controller and a wind turbine comprising such a controller are described.

## Description

### Field of Invention

The present invention relates to the field of wind turbines, in particular to methods and controller for controlling the rotor speed of a wind turbine generator.

### Art Background

The rotational speed of a wind turbine rotor can be controlled by either changing the amount of energy extracted from the drive train (e.g. by changing the electrical torque of an electrical generator) or by changing the aerodynamic torque provided from the blades. In order to control the aerodynamic torque to change the rotor speed and/or the wind turbine energy output and due to the fact that the properties of the prevailing wind are continuously changing (e.g. in terms of wind direction, wind speed and turbulence), a means of changing the aerodynamic properties of the wind turbine rotor is required.

On a conventional horizontal axis wind turbine, the desired aerodynamic properties of the rotor are usually obtained by adjusting the yaw angle of the rotor to align with the prevailing wind direction and by adjusting the pitch angle of the individual blades to compensate for changes in the wind speed (effectively the energy content in the wind) and or the desired energy extraction.

As the existing approach relies on both functioning yaw- and pitch systems to control the RPM wind turbine rotor, the turbine cannot perform as intended if either of the systems is not available, e.g. due to a malfunction or for some other reason.

There may thus be a need for an improved way of controlling the aerodynamic properties of a wind turbine rotor and thereby the speed of the wind turbine rotor without the drawbacks mentioned above.

### Summary of the Invention

This need may be met by the subject matter according to the independent claims. Advantageous embodiments of the present invention are described by the dependent claims.

According to a first aspect of the invention there is provided a method of controlling rotor speed of a wind turbine generator. The method comprises (a) receiving a reference rotor speed value, (b) determining an actual rotor speed value, and (c) regulating a rotor yaw angle in dependency of a difference between the reference rotor speed value and the actual rotor speed value.

This aspect of the invention is based on the idea that the rotor speed can be controlled by regulating the rotor yaw angle, e.g. by turning the wind turbine rotor more or less in and out of the wind.

According to an embodiment of the invention, the method further comprises determining a current wind direction angle. Furthermore, regulating the rotor yaw angle comprises adjusting the rotor yaw angle to change a difference between the rotor yaw angle and the current wind direction angle.

In other words, the degree of misalignment between the wind turbine rotor and the wind (i.e. the difference between the rotor yaw angle and the current wind direction angle) is changed in order to influence the rotor speed.

According to a further embodiment of the invention, the method further comprises determining a sign of the difference between the rotor yaw angle and the current wind direction angle. Furthermore, the yaw angle is regulated by a controller receiving the difference between the reference rotor speed value and the actual rotor speed value as a first input and the sign of the difference between the rotor yaw angle and the current wind direction angle as the second input.

By having the sign of the difference between the rotor yaw angle and the current wind direction angle available as a second input, the controller can determine whether it should increase or reduce the yaw angle in order to increase or reduce the misalignment between the rotor and the wind direction.

According to a further embodiment of the invention, the yaw angle is adjusted to increase the absolute difference between the rotor yaw angle and the current wind direction angle if the actual rotor speed value is larger than the reference rotor speed value and to decrease the absolute difference between the rotor yaw angle and the current wind direction angle if the actual rotor speed value is larger than the reference rotor speed value.

In other words, the misalignment between the rotor and the wind (i.e. the absolute difference between the rotor yaw angle and the current wind direction angle) is increased if the actual rotor speed is too fast and reduced if it is too slow.

According to a further embodiment of the invention, the controller is a PI controller, i.e. a proportional-integral controller.

In other embodiments, the controller may be a PID (proportional-integral-derivative) controller.

According to a further embodiment, the controller comprises a look-up table indicating an amount of yaw angle adjustment to be applied for a given difference between the reference rotor speed value and the actual rotor speed value.

In this embodiment, the controller may preferably apply the adjustment at given points in time (i.e. discontinuously). Furthermore, the controller may preferably only apply the adjustment, if the rotor speed is above or below a predetermined threshold value.

According to a further embodiment of the invention, the sign of the first input is changed in dependency of the second input.

In other words, the sign of the difference between the reference rotor speed value and the actual rotor speed value, which is provided as the first input to the controller, may be changed in dependency of the sign of the misalignment (i.e. the sign of the difference between the rotor yaw angle and the current wind direction angle). Thereby, it can be assured that the misalignment (in absolute terms) is increased or decreased as desired independent of whether the wind turbine rotor is currently turned to the right or to the left relative to the wind direction.

According to a further embodiment of the invention, the sign of the first input is changed to be equal to the sign of the second input when the absolute difference between the rotor yaw angle and the current wind direction angle exceeds a predetermined threshold value.

In other words, the sign of the first input is not changed as soon as the sign provided as the second input changes but first when the absolute difference between the rotor yaw angle and the current wind direction angle exceeds a predetermined threshold value.

This introduces a certain amount of hysteresis in the controller which prevents excessive changes of the yaw angle. According to a further embodiment of the invention, the reference rotor speed value is a lower rotor speed limit value, and the method further comprises receiving an upper rotor speed limit value, and determining whether the actual rotor speed value is below the lower rotor speed limit value or above the upper rotor speed limit value, wherein regulating the rotor yaw angle comprises adjusting the rotor yaw angle if it is determined that the actual rotor speed value is below the lower rotor speed limit value or above the upper rotor speed limit value.

In this embodiment, the rotor yaw angle is adjusted in case the actual rotor speed value is outside an interval defined by lower and upper rotor speed limit values.

According to a further embodiment of the invention, adjusting the rotor yaw angle comprises adjusting the rotor yaw angle by a predetermined amount.

The predetermined amount is preferably selected such that given the prevailing circumstances (e.g. yaw error or misalignment, wind speed, wind direction, rotor speed, alone or in combination) only one adjustment (or at least a small number of adjustments) will have to be done in order to bring the actual rotor speed value back into the desired interval.

The predetermined amount may furthermore be selected such that the rotor speed is brought back towards a rotor speed value that lies in the middle of the interval. Alternatively, the adjustment may aim at another rotor speed value within the interval, e.g. a value that is dynamically determined in dependency on prevailing conditions. For example, the value aimed at may be closer to the lower rotor speed limit value if it is determined that the rotor speed (and thus the wind speed) has been increasing for a certain period of time. According to a further embodiment of the invention, the predetermined amount is read from a look-up table.

According to a second aspect of the invention, a wind turbine controller is provided. The wind turbine controller comprises a rotor speed controller adapted to control a rotor speed of a wind turbine generator by performing the method according to the first aspect or any one of the above embodiments.

According to a third aspect of the invention, a wind turbine is provided. The wind turbine comprises a controller according to the second aspect.

It is noted that embodiments of the invention have been described with reference to different subject-matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject-matter also any combination of features relating to different subject-matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

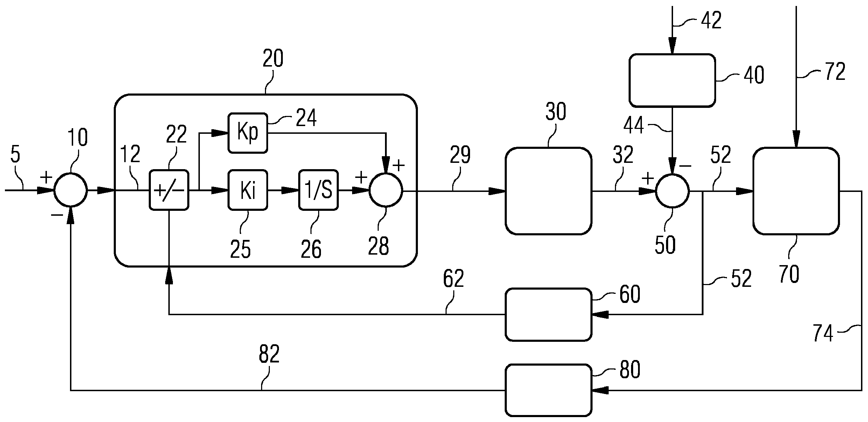

Figure 1 shows a block diagram of a system for controlling rotor speed of a wind turbine generator in accordance with an embodiment of the present invention.

### Detailed Description

The illustration in the drawing is schematic. It is noted that in different figures, similar or identical elements are provided with the same reference numerals or with reference numerals which differ only within the first digit.

Figure 1 shows a block diagram of a system for controlling rotor speed of a wind turbine generator in accordance with an embodiment of the present invention. The system comprises a subtracting unit 10, a PI controller 20, a yaw system 30, a wind direction sensor 40, a subtracting unit 50, a sign determining unit 60, a wind turbine rotor system 70, and a rotor speed determining unit 80.

The subtraction unit 10 receives a reference rotor speed value 5 and an actual rotor speed value 82, and supplies a corresponding difference value 12 to a sign changing unit 22 within the PI controller 20. The PI controller 20 further comprises a proportional multiplication unit 24, an integration multiplication unit 25, an integrator 26, and a summation unit 28 coupled to the proportional multiplication unit 24 and the integrator 26 and adapted to generate a misalignment reference value 29 indicating an amount of misalignment to be set for the rotor yaw angle relative to the wind direction. The misalignment reference value 29 is supplied to yaw system 30 of the wind turbine which determines a corresponding value of the rotor yaw angle 32. The wind direction sensor 40 is exposed to the wind 42 and determines a corresponding wind direction angle, i.e. an angle value in the same reference system as the rotor yaw angle 32. In other words, if the rotor yaw angle 32 is equal to the wind direction angle 44, the wind turbine rotor points directly into the wind (corresponding to zero misalignment).

The subtracting unit 50 receives the rotor yaw angle 32 and the wind direction angle 44 and calculates a corresponding difference 52 which is indicative of the misalignment. The difference 52 is supplied to both the sign determining unit 60 and to the wind turbine rotor system 70. The sign determining unit determines the sign 62, i.e. + (plus) or - (minus) of the difference value 52 and supplies this to the sign changing unit 22. The latter changes the sign of the difference value 12 in dependence of the determined sign 62. Preferably, the sign changing unit only applies a sign change (i.e. from plus to minus and vice versa) when the absolute value of the misalignment 52 is above a predetermined threshold value. The misalignment or difference 52 is also supplied to the wind turbine rotor system 70 which also receives a wind speed value 72 and outputs a rotor speed sensor signal 74. The rotor speed determining unit 80 determines the actual rotor speed value 82 based on the rotor speed sensor signal 74 and supplies it to the subtracting unit 10 as described above.

In operation, the subtracting unit 10 outputs the difference 12 between the reference rotor speed value 5 and the actual rotor speed value 82. The difference 12 is supplied as a first input to the PI controller 20 which receives the sign 62 of the misalignment 52 from the sign determining unit as a second input. Using the first and second input, the PI controller 20 generates a yaw misalignment reference 29, i.e. a value corresponding to the absolute value of the desired difference between the rotor yaw angle 32 and the wind direction angle 44.

Thus, when the actual rotor speed value 82 exceeds the reference rotor speed value 5, the PI controller 20 and yaw system 30 will adjust the yaw angle 32 in order to increase the misalignment between the wind turbine rotor and the wind direction (i.e. by yawing the rotor further out of the wind). Similarly, when the actual rotor speed value 82 is below the reference rotor speed value 5, the PI controller 20 and yaw system 30 will adjust the yaw angle 32 in order to reduce the misalignment between the wind turbine rotor and the wind direction (i.e. by yawing the rotor further into the wind).

Thereby, it is possible to effectively control the rotor speed in situations where the wind turbines pitching system is out of order or where a maximum pitch has already been reached. In this way, the wind turbine may continue to operate in a "reduced performance mode" which can be useful in certain situations, such as in the event of no grid.

As an alternative to the closed loop control discussed in conjunction with the embodiment shown in Fig. 1, the yaw misalignment may be adjusted using a look-up table and various prevailing operating conditions, such as wind speed, wind direction, rotor speed, and yaw misalignment.

Furthermore, a lower rotor speed limit value and an upper rotor speed limit value may be set and the look-up table may be used to adjust the yaw angle when the actual rotor speed value gets outside of the interval defined by these lower and upper limits.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A method of controlling rotor speed of a wind turbine generator, the method comprising
receiving a reference rotor speed value (5),
determining an actual rotor speed value (82), and
regulating a rotor yaw angle (32) in dependency of a difference (12) between the reference rotor speed value and the actual rotor speed value.

2. The method according to the preceding claim, further comprising
determining a current wind direction angle (44),
wherein regulating the rotor yaw angle comprises adjusting the rotor yaw angle to change a difference between the rotor yaw angle and the current wind direction angle.

3. The method according to the preceding claim, further comprising
determining a sign (62) of the difference between the rotor yaw angle and the current wind direction angle,
wherein the yaw angle is regulated by a controller (20) receiving the difference between the reference rotor speed value and the actual rotor speed value as a first input and the sign of the difference between the rotor yaw angle and the current wind direction angle as the second input.

4. The method according to claim 2 or 3, wherein the yaw angle is adjusted to increase the absolute difference between the rotor yaw angle and the current wind direction angle if the actual rotor speed value is larger than the reference rotor speed value and to decrease the absolute difference between the rotor yaw angle and the current wind direction angle if the actual rotor speed value is smaller than the reference rotor speed value.

5. The method according to claim 3 or 4, wherein the controller is a PI controller.

6. The method according to claim 3 or 4, wherein the controller comprises a look-up table indicating an amount of yaw angle adjustment to be applied for a given difference between the reference rotor speed value and the actual rotor speed value.

7. The method according to any one of claims 3 to 6, wherein the sign of the first input is changed in dependency of the second input.

8. The method according to the preceding claim, wherein the sign of the first input is changed to be equal to the sign of the second input when the absolute difference between the rotor yaw angle and the current wind direction angle exceeds a predetermined threshold value.

9. The method according to any of the preceding claims, wherein the reference rotor speed value is a lower rotor speed limit value, the method further comprising
receiving an upper rotor speed limit value, and determining whether the actual rotor speed value is below the lower rotor speed limit value or above the upper rotor speed limit value,
wherein regulating the rotor yaw angle comprises adjusting the rotor yaw angle if it is determined that the actual rotor speed value is below the lower rotor speed limit value or above the upper rotor speed limit value.

10. The method according to the preceding claim, wherein adjusting the rotor yaw angle comprises adjusting the rotor yaw angle by a predetermined amount.

11. The method according to the preceding claim, wherein the predetermined amount is read from a look-up table.

12. A wind turbine controller comprising
a rotor speed controller adapted to control a rotor speed of a wind turbine generator by performing the method according to any one of the preceding claims.

13. A wind turbine comprising a wind turbine controller according to the preceding claim.
